(19) Europäisches Patentamt
European Patent Office
Office européen des brevets

(11) EP 1 152 993 B1

(12) FASCICULE DE BREVET EUROPEEN

(45) Date de publication et mention de la délivrance du brevet:
**24.09.2003 Bulletin 2003/39**

(21) Numéro de dépôt: **99903739.3**

(22) Date de dépôt: **12.02.1999**

(51) Int Cl.[7]: **C04B 11/05**, C04B 11/028

(86) Numéro de dépôt international:
**PCT/FR99/00312**

(87) Numéro de publication internationale:
**WO 00/047531 (17.08.2000 Gazette 2000/33)**

(54) **PROCEDE DE FABRICATION D'UN LIANT HYDRAULIQUE A BASE D'ANHYDRITE III OU ALPHA ET LIANT HYDRAULIQUE AINSI OBTENU**

VERFAHREN ZUR HERSTELLUNG EINES HYDRAULISCHEN BINDEMITTELS AUF DER BASIS VON ANHYDRITE III ODER ALPHA UND DAMIT HERGESTELLTES BINDEMITTEL

METHOD FOR PRODUCING AN ANHYDRITE III OR ALPHA BASED HYDRAULIC BONDING AGENT

(84) Etats contractants désignés:
**AT BE CH CY DE DK ES FI FR GB GR IE IT LI LU MC NL PT SE**
Etats d'extension désignés:
**AL LT LV MK RO SI**

(43) Date de publication de la demande:
**14.11.2001 Bulletin 2001/46**

(73) Titulaire: **Société Européenne d'Exploitation de Technologies Industrielles**
**06110 Le Cannet (FR)**

(72) Inventeur: **COUTURIER, Jean**
**06110 Le Cannet (FR)**

(74) Mandataire: **Domange, Maxime et al**
**Cabinet Beau de Lomenie,**
**232, avenue du Prado**
**13295 Marseille Cedex 08 (FR)**

(56) Documents cités:
**WO-A-90/08111**
**WO-A-96/33957**
**US-A- 4 647 486**
**US-A- 5 169 617**

- **GERHARTZ W ET AL: "THE CASO4-H2O SYSTEM" , ULLMANN'S ENCYCLOPEDIA OF INDUSTRIAL CHEMISTRY, BENZYL ALCOHOL TO CALCIUM SULFATE, NR. VOL. A 4, PAGE(S) 556 - 569 559 , GERHARTZ W;YAMAMOTO Y S XP002011750 page 556, colonne de droite, alinéa 2 -page 558, colonne de gauche, alinéa 1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention concerne un procédé de traitement d'une matière première pulvérulente à base de sulfate de calcium naturel (gypse) ou de synthèse (sulfogypse, phosphogypse et autres sous-produits du même type) en vue de préparer un nouveau liant hydraulique faisant office de ciment dans une très grande proportion à base d'anhydrite III ou $\alpha$ ($\alpha$ dans la classification ASTM).

L'invention concerne également le produit issu dudit procédé et qui fait office de ciment.

Les gypses se présentent sous des formes cristallines variées et, à l'échelle moléculaire, ils présentent une structure feuilletée dans laquelle alternent une couche d'eau et deux couches de $CaSO_4$.

Les gypses sont utilisés depuis des millénaires pour la fabrication des plâtres qui sont un des plus anciens matériaux de construction connu depuis le 6ème millénaire avant Jésus Christ.

De nos jours, d'autres industries utilisent le gypse notamment :

- la fabrication des ciments (comme régulateur de prise),
- les usages agricoles,
- des industries diverses (chimie, papeterie, etc..).

Les utilisations les plus importantes concernent l'incorporation dans la fabrication du ciment et des plâtres par déshydratation du gypse.

Si dans l'industrie du ciment, le gypse est incorporé dans la cuisson du clinker et subît une cuisson élevée de l'ordre de 1400°C, dans la fabrication du plâtre, le principe essentiel est l'élimination totale ou partielle de l'eau de constitution du gypse, opération complexe qui met en jeu des phénomènes de cristallisation difficiles à maîtriser.

Plusieurs types de procédés de traitement de sulfate de calcium ont été proposés pour préparer du plâtre. En particulier, on sait préparer des plâtres améliorés (désignés parfois par "plâtres $\alpha$") qui, une fois durcis, présentent des caractéristiques mécaniques notablement plus élevées que celles des plâtres courants. Les phénomènes qui se déroulent au cours des traitements sont mal connus et l'on attribue généralement l'amélioration des performances mécaniques à la présence de l'anhydrite III ou $\alpha$ dans les produits obtenus, sans que l'on connaisse exactement la proportion de cette variété dans ces produits ni les conditions qui permettent de l'obtenir de façon stable et reproductible : elle n'existe qu'à l'état de traces.

De façon traditionnelle, ces plâtres améliorés sont fabriqués à partir de gypse en soumettant celui-ci à une phase de cuisson par voie humide en autoclave, puis à une phase de séchage à chaud par un courant d'air chaud et sec. La cuisson s'effectue en atmosphère de vapeur saturante à une pression de l'ordre de 5 à 10 bars pendant une durée de l'ordre de 10 heures.

Pour tenter de pallier les défauts de ce procédé traditionnel de fabrication de plâtre amélioré (mise en oeuvre extrêmement coûteuse, reproductibilité incertaine), on a proposé d'autres procédés qui, en fait, essayent de reproduire les conditions essentielles du procédé traditionnel (cuisson par voie humide, suivie d'un séchage par air chaud) en utilisant des moyens et des technologies différents (brevets FR-2.389.855, FR-2.445.940, FR-2.572.721, US-2.269.580, US-3.145.980).

Le procédé de l'invention a été conçu à partir de l'observation suivante, lorsqu'un sulfate de calcium est traité de façon habituelle pour obtenir du "plâtre amélioré", le produit obtenu est en fait un mélange de formes anhydres (anhydrite $\gamma$) ou hydratées (semihydratés, bihydrates,...). Les études de l'inventeur ont montré que ceci provient essentiellement de deux facteurs. Tout d'abord une cuisson conduisant à l'anhydrite $\alpha$ mais aussi aux autres formes, et surtout une évolution du produit après la cuisson, avec transformation partielle de celui-ci notamment par réhydratation. L'idée essentielle ayant conduit au procédé de l'invention a été de réaliser un produit final stable contenant une proportion pondérale d'anhydrite $\alpha$ beaucoup plus élevée que celle contenue dans les plâtres améliorés connus et, pour ce faire, de figer la structure du composé obtenu à l'issue de la cuisson par une trempe thermique. On bloque ainsi considérablement la transformation ultérieure de l'anhydrite $\alpha$ formé par la cuisson.

Selon le document PCT/FR96/00622, l'opération de trempe est de préférence mise en oeuvre de façon à amener la matière chauffée par la cuisson à une température inférieure à 100°C en un temps compris entre 6 et 12 minutes. Elle peut être réalisée au moyen d'air comprimé froid et sec, injecté à plusieurs emplacements dans la matière en mouvement, le débit d'air étant ajusté pour obtenir la vitesse de refroidissement appropriée.

Néanmoins, cette trempe n'est pas suffisamment efficace pour obtenir une proportion d'anhydrite III ou $\alpha$ réellement déterminante. Cette dernière demande de brevet d'invention ne permettait pas d'obtenir un pourcentage très élevé d'anhydrite III ou $\alpha$ soit de 90 % et ce de manière à obtenir un liant hydraulique qui puisse faire office de ciment.

Le procédé selon l'invention permet d'obtenir un tel produit.

L'invention a pour objet d'affiner le procédé pour obtenir un pourcentage élevé d'anhydrite III ou $\alpha$ stable et soluble.

Le procédé selon l'invention permet de transformer plus de 90% du sulfate de calcium pur en anhydrite III ou α.

A cet effet, la présente invention concerne un procédé de synthèse d'un liant hydraulique à base de sulfate de calcium naturel (gypse) ou de synthèse (sulfogypse, phosphogypse, titanogypse, etc), consistant à chauffer le sulfate de calcium pour former :

- un liant hydraulique faisant office de ciment à base d'anhydrite III ou α caractérisé par le fait qu'il contient plus de 70 % d'anhydrite III ou α stable et soluble et qu'il consiste à réaliser:

- une phase de cuisson ou trempe thermique qui porte la température du gypse traité de la température ambiante à une température comprise entre 220°C et 350°C selon les caractéristiques du gypse traité,

- à soumettre le produit ainsi obtenu à une trempe thermique rapide abaissant sa température de 220°C-350°C à moins de 80°C en moins de deux minutes ayant pour but de stabiliser l'anhydrite α par blocage et fixation cristallographique. Selon un mode de réalisation du procédé, la température de chauffage est de 300-310°C.

Selon un mode de réalisation préféré, la température de la trempe thermique est comprise entre 40°C et 50°C.

Selon un mode de réalisation préféré, la montée en température s'effectue entre 10 et 40 minutes, selon la nature et la granulométrie du gypse.

Le gypse traité comporte avant traitement de 0 à 20% d'eau, sa granulométrie est comprise entre 0 et 30 mms.

Selon un mode préféré, le gypse traité comporte 5 à 15 % d'eau et sa granulométrie est comprise entre 0 et 10 mms.

Liant hydraulique faisant office de ciment à base d'anhydrite III ou α obtenu par le procédé ci-dessus caractérisé par le fait qu'il contient plus de 70% d'anhydrite III ou α stable et soluble.

Liant hydraulique faisant office de ciment à base d'anhydrite III ou α obtenu par le procédé ci-dessus caractérisé par le fait qu'il contient plus de 90% d'anhydrite III ou α stable ou soluble.

Liant hydraulique faisant office de ciment à base d'anhydrite III ou α obtenu par le procédé ci-dessus caractérisé par le fait que la résistance mécanique est de

22 MPA à 24 heures
30 MPA à 8 jours
plus de 40 MPA à 14 jours.

La présente invention concerne encore un liant hydraulique faisant office de ciment obtenu par mise en oeuvre du procédé ci-dessus.

Le concept inventif essentiel de l'invention a donc été d'accroître la proportion d'anhydrite α du produit, le moyen essentiel utilisé consistant à limiter, par un refroidissement rapide, l'évolution du produit après cuisson. Pour accroître encore cette proportion en anhydrite α, l'inventeur s'est également attaché à optimiser l'opération de cuisson de façon à obtenir la quantité la plus importante possible de cette variété à l'issue de la cuisson.

Ainsi, soumis à la chaleur, le gypse conduit à une série de produits hydratés ou anhydres.

Aux environs de 100°C on obtient les semi-hydratés α ou β (selon que l'on opère respectivement sous pression en vapeur d'eau ou à l'air libre) suivant la réaction :

$$CaSO_4,\ 2\ H_2O \leftrightarrow CaSO_4,\ 1/2\ H_2O + 3/2\ H_2O$$

monoclinique — rhomboédrique

Vers 300°C on obtient l'anhydrite III ou anhydrite très soluble mais très instable et qui se réhydrate immédiatement en semi-hydrate au contact de l'eau en phase vapeur :

$$CaSO_4,\ 1/2\ H_2O \leftrightarrow CaSO_4\ III(ou\ \alpha) + 1/2\ H_2O$$

rhomboédrique — hexagonal

Vers 300°C pour le semi-hydrate α et 350°C pour le β, l'anhydrite III(ou α) se transforme en anhydrite II stable (surcuit) :

$$CaSO_4 \text{ III (ou } \alpha) \leftrightarrow CaSO_4 \text{ II}$$

hexagonal orthorombique

L'anhydrite III se réhydrate lentement au contact de l'eau liquide.

Vers 1230°C se produit une nouvelle réaction de transformation.

$$CaSO_4 \text{ II} \leftrightarrow CaSO_4 \text{ I}$$

orthorhombique cubique à faces centrées

L'anhydrite $CaSO_4$ I ne se réhydrate que très difficilement.

Au-delà de 1250°C, on obtient la décomposition de l'anhydrite I :

$$CaSO_4 \text{ I} \leftrightarrow CaO + SO_2 + 1/2\ O_2$$

Les applications industrielles du plâtre actuelles utilisent uniquement :

- le semi-hydrate $\alpha$,
- le semi-hydrate $\beta$, et
- l'anhydrite II (insoluble ou surcuit).

L'anhydrite III ou $\alpha$, faisant l'objet de la présente invention, ne peut être utilisée vu sa grande instabilité.

On connaît d'autre part la diversité du plâtre dans le bâtiment et ses nombreuses faiblesses en résistante, tenue à l'humidité, accrochage sur certains supports, etc.

La présente invention concerne un liant hydraulique obtenu par un traitement thermique spécifique et nouveau du gypse comportant deux phases essentielles. La première dite de déshydratation permettant l'obtention d'un pourcentage élevé d'anhydrite $SO_4Ca$ III (ou $\alpha$). La seconde phase de refroidissement brutal entraînant une cristallographie "bloquée" et rendant l'anhydrite $SO_4Ca$ III ou $\alpha$ stable et son utilisation possible.

Ce refroidissement brutal dit trempe thermique en atmosphère sèche n'a jamais été pratiquée dans l'industrie du plâtre.

Les plâtres industriels sont obtenus uniquement par déshydratation et cuisson des gypses sans subir aucun refroidissement thermique, ce qui constitue l'objet principal de l'invention.

Les conditions techniques de ce nouveau liant hydraulique objet de l'invention comportent :

1°) une phase de déshydratation comportant une montée en température du gypse à traiter à faible humidité (de 3 à 15% d'eau).

La montée en température se réalise en un temps de 10 à 40 minutes pour atteindre une température de 220 à 350°C selon la nature du gypse, ou plus précisément entre 300°C et 310°C..

2°) Le refroidissement brutal ou trempe thermique en atmosphère sèche.

Cette trempe thermique ou refroidissement brutal jamais encore envisagée ou utilisée dans l'industrie du gypse, permet de stabiliser l'anhydrite $SO_4Ca$ III ou $\alpha$, très soluble et de bloquer sa cristallisation obtenue par ce choc thermique qui doit abaisser, en moins de deux minutes, la température de 220-350°C à moins de 80°C.

Grâce à un pourcentage élevé d'anhydrite $CaSO_4$ III ou $\alpha$ stable et soluble (plus de 70, voire 90%), on obtient un liant hydraulique remarquable qui concurrence avantageusement la plupart des liants actuels.

Les caractéristiques de ce nouveau liant sont :

- sa tenue au feu : inflammabilité classée dans la catégorie Mo suivant la norme NF P 92-507,
- une prise excellente à l'eau de mer,
- un accrochage remarquable sur tous supports, et
- sa prise à température très basse ou élevée, etc.

Les applications industrielles de ce liant doivent intéresser les industries du ciment, du béton et du plâtre, l'inertage de déchets ou sous produits industriels, la fabrication de mélanges avec des matériaux se combinant bien avec le sulfate de calcium, la réalisation de l'habitat dans les pays en voie de développement, etc.

La fabrication de ce liant hydraulique doit faire appel à des techniques connues : cuisson à température basse (220 à 350°C) et refroidissement. Elle peut être réalisée par des installations très simples.

Ce liant hydraulique présente, en dehors de ses qualités techniques, un intérêt :

- économique,
- d'économie d'énergie,
- écologique : aucune pollution.

Après déshydratation complète, un pourcentage de plus de 50% d'anhydrite $SO_4Ca$ III ou $\alpha$, voire 70 à 80%, alors que le refroidissement brutal entraîne une cristallisation de l'anhydrite $SO_4Ca$ III ou $\alpha$ la rendant stable et soluble et permettant son utilisation industrielle.

Les conditions de mise en oeuvre suivantes paraissent fournir les meilleurs résultats. On contrôle, préalablement, le taux d'humidité de la matière première et on ajuste, le cas échéant, ce taux à une valeur sensiblement comprise entre 12 % et 20 % ; l'opération de cuisson est alors mise en oeuvre en amenant la matière pulvérulente à température, en chauffant l'ensemble dans des conditions propres à élever la température des gaz au-dessus du lit de matière à une valeur comprise entre 350 et 550°C, et à porter la température moyenne au coeur de la matière à une valeur supérieure à 220°C et inférieure à 350°C. Le chauffage peut être par exemple réalisé au moyen de radiants infrarouges disposés au-dessus du lit de matière, la puissance d'émission desdits radiants étant régulée en corrélation avec la durée d'exposition de la matière.

Une explication possible des meilleurs résultats obtenus grâce à ces conditions opératoires est la suivante.

La température de 220-350°C au coeur du lit de matière est idéale pour produire l'anhydrite $\alpha$ en l'absence d'autres variétés. La valeur d'eau extraite s'échappe au-dessus du lit de matière dans une atmosphère plus chaude dont la température est supérieure à son point critique (365°C). Elle atteint très vite l'état supercritique ce qui évite ou limite une réhydratation et une évolution en surface de la matière de sorte qu'au terme de la cuisson, la proportion d'anhydrite $\alpha$ est très élevée (sans qu'il soit possible de donner des proportions précises puisque des prélèvements avant le refroidissement évoluent immédiatement).

La réaction de transformation exothermique de l'anhydrite $\alpha$ en bassanite est très vite bloquée par le refroidissement qui stabilise l'anhydrite $\alpha$. De plus, il semble que le refroidissement bloque complètement une évolution de l'anhydrite $\alpha$ vers le plâtre bassanite qui ne se retrouve qu'à l'état de trace dans le produit final (contrairement aux liants connus qui comportent une forte proportion de cette variété).

Ainsi, le produit obtenu par prise du liant conforme à l'invention visée ci-dessus (sans charge) a été soumis à des tests d'inflammabilité selon la norme NF P 92-507 (éprouvettes de 0,30 m/0,40 m soumises au rayonnement d'une source de chaleur constante). La détermination des quatre indices prévus dans cette norme (indice d'inflammation, indice de développement, indice de longueur maximal de flamme, indice de combustibilité) a permis de classer le produit dans la catégorie la plus performante MO des six catégories prévues par la norme.

En outre, des essais de résistance selon la norme ont donné les résultats suivants :

- résistance à la compression : 40 MPA, et
- résistance à la flexion : 10 MPA.

De plus, des essais qualitatifs en situation immergée ont montré que le produit gardait de bonnes qualités de résistance dans cette situation.

L'étude ci-après décrite de la déshydratation du sulfate de calcium a permis de perfectionner le procédé selon l'invention pour obtenir un véritable liant hydraulique faisant office de ciment.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une courbe de déshydratation thermique du gypse.

La figure 2 représente un réseau de Doehlert à deux dimensions.

La figure 3 représente un pavage de l'espace uniforme.

La figure 4 représente un réseau uniforme de Doehlert à trois dimensions.

La figure 5 est une vue mettant en évidence la superposition des spectres de rayons X

A - Déshydratation du sulfate de calcium :

L'étude porte sur le traitement d'une matière pulvérulente à base de sulfate de calcium en vue de la fabrication

d'un nouveau liant hydraulique, ayant des caractéristiques intéressantes concernant la vitesse de prise, et certaines propriétés physiques (conductivité thermique, résistance mécanique, isolation acoustique, etc.).

Ce procédé consiste à combiner deux types de traitement successifs :

- chauffer la matière pulvérulente à une température comprise entre 220 et 350°C, afin de former de l'anhydrite α (ou anhydrite III) (voir la figure 1).
- faire subir à la matière ainsi chauffée, une trempe thermique en vue de stabiliser cette phase métastable. Ainsi son évolution vers d'autres variétés cristallographiques sera bloquée et la réhydratation en bassanite, phase majeure du plâtre, évitée.

B-<u>Méthodologie des plans d'expériences</u> :

- De nombreuses expériences ont été réalisées de manière empirique sur des gypses naturels mais aussi des phosphogypses, titanogypses, borogypses et désulfogypses.

Toutefois, l'inventeur a eu recours à la planification d'expérience afin de déterminer l'influence des facteurs susceptibles d'intervenir sur la formation de la phase anhydrite α et de limiter le nombre de manipulations.

Nous avons donc fait varier la température de 280 à 320°C, la durée du palier de 10 minutes à 70 minutes, et nous avons opéré avec 3 tranches granulométriques : <80;80-100;100-200 μm.

La méthodologie des plans d'expériences, basée sur une approche mathématique et statistique, passe par une modélisation du phénomène à partir d'un polymôme écrit en variables codées adimensionnelles. A chacune de ces variables notées $X_i$ correspond une variable naturelle $U_i$ suivant l'équation :

$$U_i^a = U_i^o + X_i^a \times \Delta U_i$$

où

i = le facteur

$U_i^a$= valeur de la variable naturelle i pour l'expérience a

$U_i^o$= valeur de la variable naturelle i au centre du domaine expérimental

$$U_i^o = \left[U_i^{(+1)} + U_i^{(-1)}\right] / 2$$

$X^a_i$ = valeur de la variable codée i pour l'expérience a

$\Delta U_i$= pas de varation de la variable naturelle i :

$$\Delta U_i^o = \left[U_i^{(+1)} - U_i^{(-1)}\right] / 2$$

Dans le cadre de l'élaboration de ce nouveau liant hydraulique, la stratégie est l'utilisation du réseau uniforme de Doehlert, stratégie qui permet d'estimer (par la loi des moindres carrés) les coefficients d'un modèle polynômial.

En effet, dans un espace codé [(-1) (+1)] pour les variables étudiées, l'équation générale est donnée ci-dessous :

$$y = b_o + \sum_{i=1}^{k} b_i X_i + \sum_{i=1}^{k} b_{ii} X_i^2 + \sum_{\substack{i<j \\ j=2}}^{k} b_{ij} X_i X_j$$

Avec

y = réponse mesurée (paramètre de sortie)

$b_o$ = valeur moyenne de la réponse

$b_i$ = effet principal de la variable i

$b_{ii}$ = effet carré de la variable i

$b_{ij}$ = effet d'interaction entre les variables i et j

Dans le cas de deux variables sont représentés sur la figure 3 les sept expériences réalisées distribuées selon un hexagone régulier centré inscrit dans un cercle de rayon 1.

Les deux variables étant la température (280 à 320°C) et le temps (10 à 70 min), la matrice d'expérience (en variables codées) et le plan d'expérimentation (en variable naturelles) sont données dans le tableau 1.

Tableau 1

| Matrice d'expériences et plan d'expérimentation pour un réseau uniforme de Doehlert à deux dimensions | | | | |
|---|---|---|---|---|
| Variables codées ($X_i$) | | | Variables naturelles ($U_i$) | |
| n° | X1 | X2 | Température (°C) | Temps (min) |
| 1 | 1 | 0 | 320 | 40 |
| 2 | -1 | 0 | 280 | 40 |
| 3 | 0,5 | 0,866 | 310 | 70 |
| 4 | -0,5 | -0,866 | 290 | 10 |
| 5 | 0,5 | -0,866 | 310 | 10 |
| 6 | -0,5 | 0,866 | 290 | 70 |
| 7 | 0 | 0 | 300 | 40 |

Ce modèle se caractérise donc par cinq valeurs de la température et 3 niveaux de temps.

Par exemple, pour la température on a :

$$U_1^o = (320 + 280)/2 = 300°C \text{ avec } U_1^{(-1)} = 280°C \; U_1^{(+1)} = 320°C$$

$$\Delta U_i = (320 + 280) / 2 = 20°C \text{ et } X_i = 0.5$$

Cette stratégie possède deux avantages :

- en effet si, après réalisation des sept expériences du 1er hexagone centré représenté figure 4, seuls quatre résultats (pourcentage d'anhydrite $\alpha$, représenté en gras sur la figure 4) sont intéressants, uniquement trois manipulations

sont nécessaires pour construire le deuxième hexagone régulier centré. Une même approche permettrait de construire un troisième hexagone. Ainsi le pavage de l'espace de manière uniforme est réalisé et les conditions optimales d'obtention d'anhydrite α définis.

- par ailleurs, pour étudier l'influence d'un troisième facteur, (par exemple la granulométrie) seules six expériences supplémentaires seront nécessaires (trois de granularités supérieures à celle utilisée pour la réalisation des sept premiers essais et trois de granularités inférieures, ceci de manière symétrique).

Ainsi la représentation en trois dimensions du réseau uniforme de Doehlert se fait par une sphère centrée avec l'hexagone dans le plan équatorial. Elle se caractérise alors par cinq valeurs de la température, sept niveaux temps et trois tranches granulométriques (voir figure 5).

La planification d'expériences va donc nous permettre de limiter considérablement le nombre de manipulations. La matrice d'expériences, le plan d'expérimentation et les résultats sont donnés tableau 2.

C - <u>Les résultats</u> :

A partir d'un gypse naturel, l'inventeur a effectué les treize manipulations déterminées par le plan d'expérimentation et représentées sur la figure 5.

L'analyse thermique pondérale (A.T.P.) et l'enthapie différentielle (D.S.C.) ont permis de déterminer le pourcentage d'anhydrite α. La diffractométrie des rayons X a permis de mettre en évidence les phases en présence, et de distinguer deux variétés de $CaSO_4\alpha$ que nous appellerons $\alpha_1$ et $\alpha_2$ (voir la figure 6).

Les résultats sont consignés dans le tableau 2 suivant :

Tableau 2

Matrice d'expérience, plan d'expérimentation et résultat d'analyse des produits traités à partir d'un gypse naturel.

| Matrice d'expériences | | | | Plan d'expérimentation | | | Réponse | | |
|---|---|---|---|---|---|---|---|---|---|
| N° | X1 | X2 | X3 | T° (°c) | Temps (min. ) | Granulométrie (μm) | % d'anh α | t° réaction endo* | Qté d'anh $\alpha_2$⊗ |
| 1 | 1 | 0 | 0 | 320 | 40 | 80-100 | 86.1 | 127.5 | ● |
| 2 | -1 | 0 | 0 | 280 | 40 | 80-100 | 89.7 | 120.7 | ○ |
| 3 | 0,5 | 0,866 | 0 | 310 | 70 | 80-100 | <u>90.3</u> | 119.8 | ● |
| 4 | -0,5 | -0,866 | 0 | 290 | 10 | 80-100 | 87.3 | 118.6 | ○ |
| 5 | 0,5 | -0,866 | 0 | 310 | 10 | 80-100 | 84.2 | 130.5 | ● |
| 6 | -0,5 | 0,866 | 0 | 290 | 70 | 80-100 | 86.8 | 120.2 | • |
| 7 | 0,5 | 0,829 | 0,816 | 310 | 50 | 100-200 | 89.4 | 122.0 | ● |
| 8 | -0,5 | -0,829 | -0,816 | 290 | 30 | <80 | 74.7 | 135.5 | ○ |
| 9 | 0,5 | -0,829 | -0,816 | 310 | 30 | <80 | <u>89.9</u> | 118.2 | ● |
| 10 | 0 | 0,577 | -0,816 | 300 | 60 | <80 | 83.3 | 130.8 | ● |
| 11 | -0,5 | 0,829 | 0,816 | 290 | 50 | 100-200 | 81.5 | 132.9 | • |
| 12 | 0 | -0,577 | 0,816 | 300 | 20 | 100-200 | 86.5 | 120.9 | ● |
| 13 | 0 | 0 | 0 | 300 | 40 | 80-100 | <u>90.9</u> | 110.1 | ● |

● beaucoup
• peu
○ très peu
- température de chauffage ou temps élevé
- température de chauffage et/ou temps faible
* réaction endothermique Bassanite → Anhydrite α
⊗ proportion d'Anhydrite $\alpha_2$ dans un mélange de bassanite et d'anhydrite $\alpha_1$

Comme le montre les manipulations n°13, n° 3 et n°9, les meilleurs pourventages d'anhydrite α (≠90%) sont obtenus pour une température de chauffage de 300 à 310°C. Nous avons également remarqué qu'à ces bons résultats

correspondent les températures de la réaction endothermique de la bassanite minimums (110°C dans le cas de l'expérience n°13).

La figure 6 permet la mise en évidence de manière qualitative et semi quantitative des phases en présence dans les produits traités. En effet si, le produit traité est un mélange d'anhydrite $\alpha_1$ et de bassanite, c'est la raie à 2.80 Å qui a 100% d'intensité.

Par contre, la présence notable d'anhydrite $\alpha_2$ dans le produit entraine l'augmentation de la raie à 3.49Å qui passe alors à 100% d'intensité, et l'apparition de plus en plus nette de la raie à 2.85Å de l'anhydrite $\alpha_2$. Dans un même temps l'intensité relative des raies à 6.02, 3.01 et 2.80 Å diminue. Ainsi, l'observation de la superposition des spectres de rayons X montre une augmentation de la proportion de la phase anhydrite $\alpha_2$ avec la température dans un mélange anhydrite $\alpha_1$ et bassanite.

Ainsi l'invention décrite permet l'obtention d'un produit, véritable liant hydraulique, contenant plus de 70% d'anhydrite $\alpha$ (voire 80 à 90%) stable et soluble et dont les caractéristiques sont étonnantes :

- prise rapide : en trois minutes
- accélérateur de prise
- résistances mécaniques élevées (35 MPA à 7 jours)
- isolation thermique et phonique
- traitements des résidus industriels : inertage ou résistances
- enduits de façades
- chapes de bâtiments
- préfabrication maisons individuelles, etc.

Ce liant hydraulique présente, en dehors de ses qualités techniques, un intérêt :

- économique,
- d'économie d'énergie,
- écologique : aucune pollution.

Le procédé selon l'invention permet donc de transformer plus de 90% du sulfate de calcium pur en anhydrite III ou $\alpha$.

Dans tout gypse, il y a du sulfate de calcium pur plus des impuretés.

Selon la pureté du sulfate de calcium, on obtient alors différents types de ciment.

Quel que soit les produits finis, le nouveau liant comporte moins de 10% de "plâtres".

**Revendications**

**1.** Procédé de synthèse d'un liant hydraulique à base de sulfate de calcium naturel (gypse) ou de synthèse (sulfogypse, phosphogypse, titanogypse), consistant à chauffer le sulfate de calcium pour former :

- un liant hydraulique faisant office de ciment à base d'anhydrite III ou $\alpha$ **caractérisé par le fait qu'**il contient plus de 70 % d'anhydrite III ou $\alpha$ stable et soluble et qu'il consiste à réaliser :

- une phase de cuisson qui porte la température du gypse traité de la température ambiante à une température comprise entre 220°C et 350°C selon les caractéristiques du gypse traité,
- à soumettre le produit ainsi obtenu à une trempe thermique rapide abaissant sa température de 220°C-350°C à moins de 80°C en moins de deux minutes ayant pour but de stabiliser l'anhydrite $\alpha$ par blocage et fixation cristallographique.

**2.** Procédé selon la revendication 1 **caractérisé par le fait que** la température de chauffage est de 300-310°C.

**3.** Procédé selon la revendication 1 **caractérisé par le fait que** la température de la trempe thermique est comprise entre 40°C et 50°C.

**4.** Procédé selon la revendication 1 **caractérisé par le fait que** la montée en température s'effectue entre 10 et 40 minutes, selon la nature et la granulométrie du gypse.

5. Procédé selon la revendication 4 **caractérisé par le fait que** le gypse traité comporte avant traitement de 0 à 20% d'eau, sa granulométrie est comprise entre 0 et 30 mms.

6. Procédé selon la revendication 5 **caractérisé par le fait que** le gypse traité comporte 5 à 15 % d'eau et sa granulométrie est comprise entre 0 et 10 mms.

7. Liant hydraulique faisant office de ciment à base d'anhydrite III ou α obtenu par le procédé ci-dessus selon l'une quelconque des revendications 1 à 6 **caractérisé par le fait qu'**il contient plus de 70% d'anhydrite III ou α stable et soluble.

8. Liant hydraulique faisant office de ciment à base d'anhydrite III ou α obtenu par le procédé ci-dessus selon l'une quelconque des revendications 1 à 6 **caractérisé par le fait qu'**il contient plus de 90% d'anhydrite III ou α stable ou soluble.

9. Liant hydraulique faisant office de ciment à base d'anhydrite III ou α obtenu par le procédé ci-dessus selon l'une quelconque des revendications 1 à 6 **caractérisé par le fait que** la résistance mécanique est de
   22 MPA à 24 heures
   30 MPA à 8 jours
   plus de 40 MPA à 14 jours.

**Patentansprüche**

1. Verfahren zur Herstellung eines hydraulischen Bindemittels auf der Basis von natürlichem Calciumsulfat (Gips) oder synthetischem Calciumsulfat (Sulfogips, Phosphogips, Titangips), bestehend aus dem Erwärmen des Calciumsulfats zur Bildung von:

   - einem hydraulischen Bindemittel, das als Bindemittel auf der Basis von Anhydrit III oder α-Anhydrit dient, **dadurch gekennzeichnet, dass** es mehr als 70 % stabilen und löslichen Anhydrit III oder α-Anhydrit enthält, und bestehend aus der Durchführung:

   - einer Brennphase, die die Temperatur des behandelten Gipses von Raumtemperatur auf eine Temperatur bringt, die je nach den Eigenschaften des behandelten Gipses zwischen 220°C und 350°C liegt,

   - wobei das so erhaltene Produkt einer raschen thermischen Abschreckung unterworfen wird, wobei dessen Temperatur in weniger als zwei Minuten von 220°C bis 350°C auf weniger als 80°C erniedrigt wird, mit dem Ziel, das α-Anhydrit durch Blockierung und kristallographische Fixierung zu stabilisieren.

2. Verfahren gemäß Anspruch 1, **dadurch gekennzeichnet, dass** die Erwärmungstemperatur 300-310°C beträgt.

3. Verfahren gemäß Anspruch 1, **dadurch gekennzeichnet, dass** die Temperatur der thermischen Abschreckung zwischen 40°C und 50°C liegt.

4. Verfahren gemäß Anspruch 1, **dadurch gekennzeichnet, dass** der Temperaturanstieg je nach der Art und der Granulometrie des Gipses innerhalb von 10 bis 40 Minuten erfolgt.

5. Verfahren gemäß Anspruch 4, **dadurch gekennzeichnet, dass** der behandelte Gips vor der Behandlung 0 bis 20 % Wasser umfässt, wobei dessen Granulometrie zwischen 0 und 30 mm liegt.

6. Verfahren gemäß Anspruch 5, **dadurch gekennzeichnet, dass** der behandelte Gips 5 bis 15 % Wasser umfasst und seine Granulometrie zwischen 0 und 10 mm liegt.

7. Hydraulisches Bindemittel, das als Bindemittel auf der Basis von Anhydrit III oder α-Anhydrit dient, welches nach dem vorstehenden Verfahren gemäß einem der Ansprüche 1 bis 6 erhalten wird, **dadurch gekennzeichnet, dass** es mehr als 70 % stabilen und löslichen Anhydrit III oder α-Anhydrit enthält.

8. Hydraulisches Bindemittel, das als Bindemittel auf der Basis von Anhydrit III oder α-Anhydrit dient, das nach dem

vorstehenden Verfahren gemäß einem der Ansprüche 1 bis 6 erhalten wird, **dadurch gekennzeichnet, dass** es mehr als 90 % stabilen und löslichen Anhydrit III oder α-Anhydrit enthält.

**9.** Hydraulisches Bindemittel, das als Bindemittel auf der Basis von Anhydrit III oder α-Anhydrit dient, welches nach dem vorstehenden Verfahren gemäß einem der Ansprüche 1 bis 6 erhalten wird, **dadurch gekennzeichnet, dass** seine mechanische Festigkeit
22 MPA bei 24 Stunden
30 MPA bei 8 Tagen
mehr als 40 MPA bei 14 Tagen
beträgt.

**Claims**

**1.** A process for synthesizing a hydraulic binder based on natural calcium sulfate (gypsum) or synthesized calcium sulfate (sulphogypsum, phosphogypsum, titanogypsum), consisting in heating said calcium sulfate to form:

- a hydraulic binder that can be used as a cement based on anhydrite III or α anhydrite, **characterised by** the fact that it contains more than 70% of stable, soluble anhydrite III or α anhydrite and in that it consists in carrying out:

- a heating step that brings the temperature of the treated gypsum from ambient temperature to a temperature in the range 220ºC to 350ºC depending on the characteristics of the treated gypsum;
- a step for rapidly quenching the product obtained, reducing its temperature from 220ºC-350ºC to less than 80ºC in less than two minutes, with the aim of stabilizing the α anhydrite by crystallographic blocking and fixing.

**2.** A process according to claim 1, **characterised by** the fact that the heating temperature is 300ºC-310ºC.

**3.** A process according to claim 1, **characterised by** the fact that the temperature of the quench is in the range 40ºC to 50ºC.

**4.** A process according to claim 1, **characterised by** the fact that the temperature is raised in a period of 10 to 40 minutes depending on the nature and grain size of the gypsum.

**5.** A process according to claim 4, **characterised by** the fact that prior to treatment, the treated gypsum comprises 0 to 20% of water, and its grain size is in the range 0 to 30 millimeters (mm).

**6.** A process according to claim 5, **characterised by** the fact that the treated gypsum comprises 5% to 15% of water and its grain size is in the range 0 to 10 mm.

**7.** A hydraulic binder that can be used as a cement based on anhydrite III or α anhydrite obtained by the above process according to any one of claims 1 to 6, **characterised by** the fact that it contains more than 70% of stable and soluble anhydrite III or α anhydrite.

**8.** A hydraulic binder that can be used as a cement based on anhydrite III or α anhydrite obtained by the above process according to any one of claims 1 to 6, **characterised by** the fact that it contains more than 90% of stable or soluble anhydrite III or α anhydrite.

**9.** A hydraulic binder that can be used as a cement based on anhydrite III or α anhydrite obtained by the above process according to any one of claims 1 to 6, **characterised by** the fact that the mechanical strength is:
22 MPa at 24 hours;
30 MPa at 8 days;
over 40 MPa at 14 days.

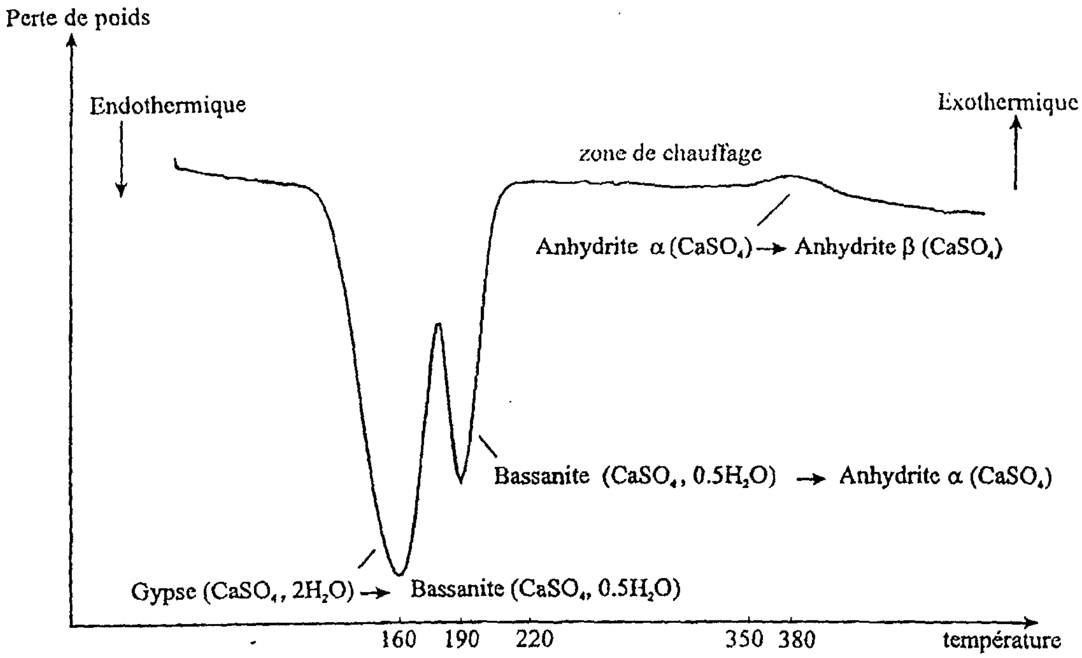


FIGURE 1 Courbe de déshydratation

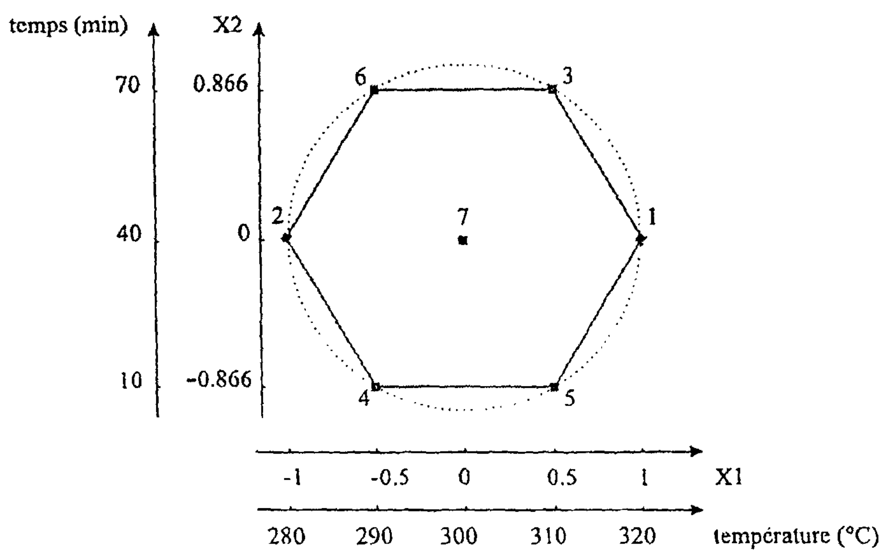


FIGURE 2 Réseau uniforme de Doehlert à deux dimensions

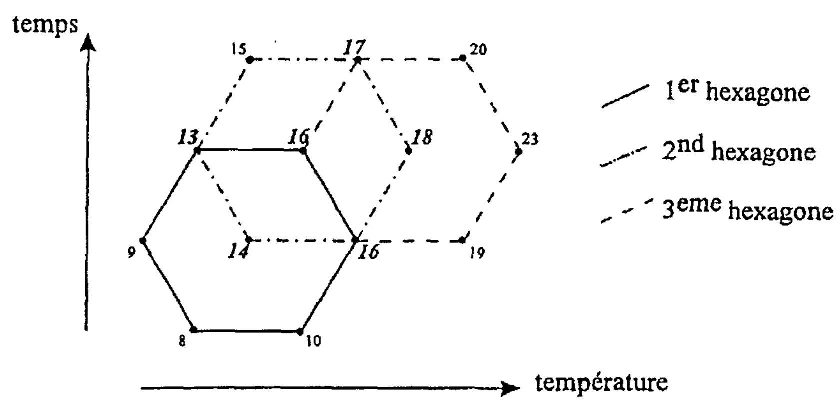


FIGURE 3 Pavage de l'espace de manière uniforme

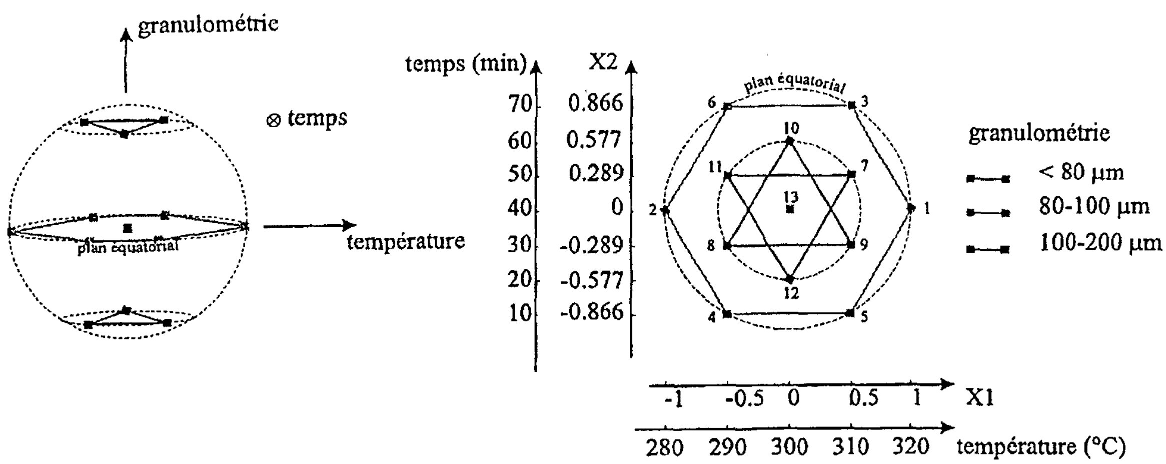


FIGURE 4 Réseau uniforme de Doehlert à trois dimensions

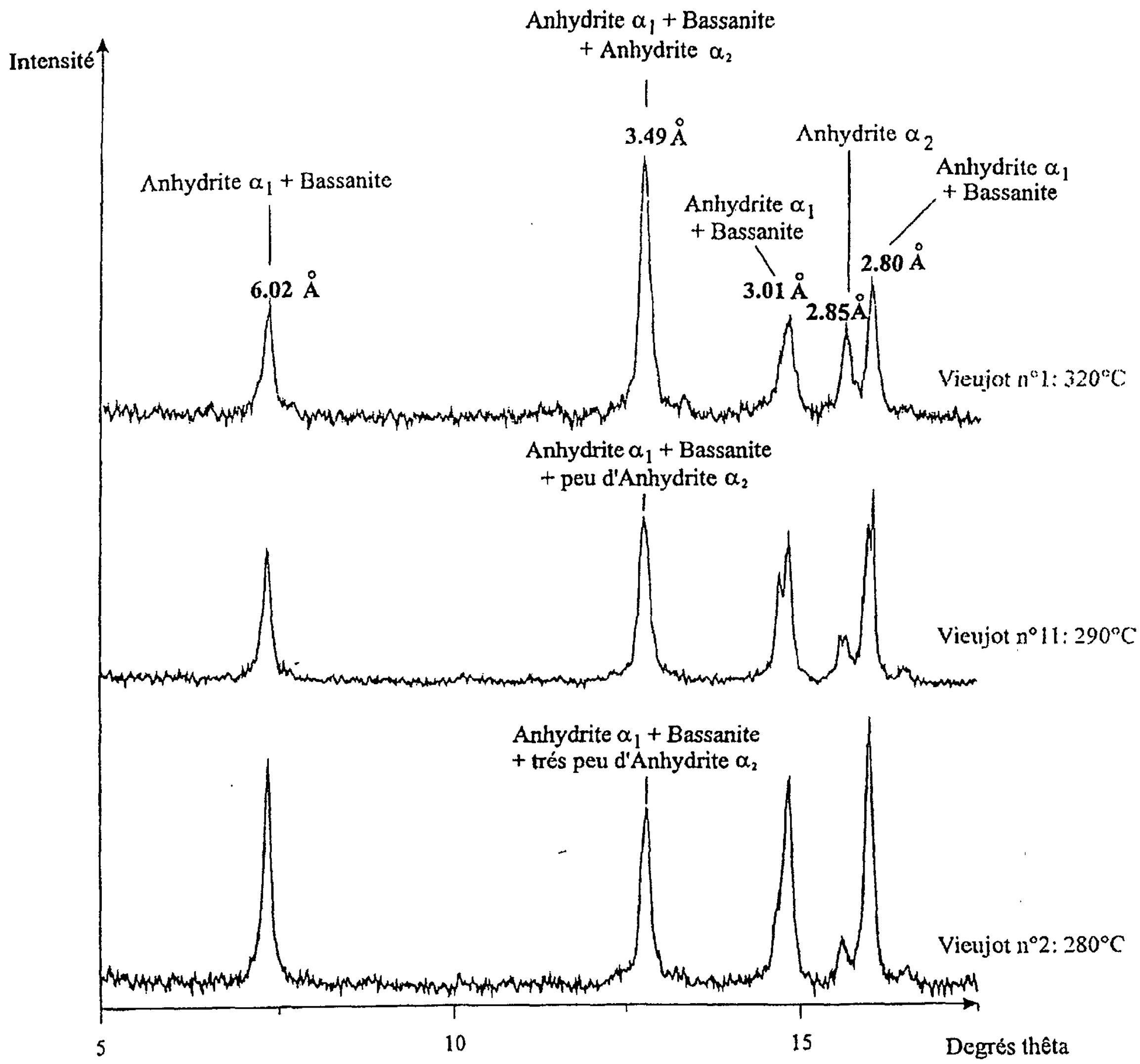


FIGURE 5 Superposition de spectres de rayons X